# EUROPÄISCHE PATENTANMELDUNG

(11) **EP 4 275 824 A1**
(43) Veröffentlichungstag der Anmeldung: **15.11.2023**
(21) Anmeldenummer: 22172863.7
(22) Anmeldetag: 11.05.2022
(51) Int. Cl.: B23K 9/10, B23K 11/26, B23K 31/00, H04W 52/00

(54) **SCHWEISSSYSTEM MIT EINEM BATTERIEBETRIEBENEN SCHWEISSGERÄT UND VERFAHREN ZUM BETREIBEN MINDESTENS EINES BATTERIEBETRIEBENEN SCHWEISSGERÄTS**

(71) Anmelder: FRONIUS INTERNATIONAL GmbH, 4643 Pettenbach (AT)
(72) Erfinder: SPEIGNER, Alexander, 4643 Pettenbach (AT); ARTELSMAIR, David, 4643 Pettenbach (AT); STARZENGRUBER, Andreas, 4643 Pettenbach (AT); HOFBAUER, Lukas, 4643 Pettenbach (AT)
(74) Vertreter: Bratovic, Nino Maria

(57) **Zusammenfassung**

Die Erfindung stellt ein Schweißsystem sowie ein Verfahren zum Betreiben mindestens eines Schweißsystems bereit. Das Schweißsystem umfasst ein batteriebetriebenes Schweißgerät (100) umfassend eine Batterie (110) und/oder eine Batterieaufnahmevorrichtung (112) zur Aufnahme einer Batterie (110) sowie eine Sensoreinrichtung (120), welche zum regelmäßigen oder kontinuierlichen Ermitteln eines Werts mindestens eines Betriebsparameters der Batterie (110) des batteriebetriebenen Schweißgeräts (100) eingerichtet ist; eine Recheneinrichtung (130), welche dazu eingerichtet ist, basierend auf den ermittelten Werten mindestens eine zeitliche Verlaufskurve zu bestimmen; und eine Steuereinrichtung (140), welche dazu eingerichtet ist, basierend auf der mindestens einen zeitlichen Verlaufskurve mindestens eine Funktion des batteriebetriebenen Schweißgeräts (100) zu sperren, freizugeben oder zu modifizieren.

## Beschreibung

### Technisches Gebiet

Die vorliegende Erfindung betrifft ein Schweißsystem mit einem batteriebetriebenen Schweißgerät, ein batteriebetriebenes Schweißgerät sowie ein Verfahren zum Betreiben mindestens eines batteriebetriebenen Schweißgeräts. Ein Hauptaugenmerk liegt darin, sicherzustellen, dass gewünschte Funktionen des batteriebetriebenen Schweißgeräts überhaupt verfügbar sind bzw. festzustellen, in welchem Rahmen vorgegebene Anforderungen durch das batteriebetriebene Schweißgerät erfüllbar sind.

Batteriebetriebene Werkzeuge erfreuen sich zunehmender Beliebtheit, insbesondere da sie eine vielseitige und flexible Verwendung ohne Rücksichtnahme auf Stromanschlüsse ermöglichen. Für Serien von batteriebetriebenen Werkzeugen werden häufig auswechselbare Akkus eingesetzt, die somit für eine Vielzahl von verschiedenen Werkzeugen (englisch "power tools") geeignet sein sollten. Hierbei sind die Anforderungen an solche Akkus im Vergleich üblicherweise niedrig.

Auch im technischen Gebiet der Schweißgeräte sind batteriebetriebene Schweißgeräte bekannt. Bei diesen wird ein Akku mit hoher Leistungsdichte und Energiedichte verbaut, für welchen höhere Sicherheitsanforderungen und Lastanforderungen gelten.

Moderne Schweißgeräte sind häufig für eine Vielzahl von verschiedenen Einsatzgebieten und mit einer Vielzahl von verschiedenen Funktionen ausgestattet. Verschiedene Funktionen weisen dabei verschiedene Anforderungsprofile auf, welche teilweise durch das Schweißgerät oder Schweißzubehör, andererseits aber auch durch die Batterie erfüllt werden müssen.

Aus der US 10,906,122 B2 ist ein Energiemanagementsystem für ein portables akkubetriebenes Bolzenschweißgerät bekannt. Dieses Energiemanagementsystem kontrolliert und überwacht den Bolzenschweißprozess, indem es aktuelle Messwerte für Stromspannung und Temperatur einer Batterie misst. Wenn die Batteriespannung während dem Schweißen außerhalb vorgegebener Grenzwerte liegt, wird eine Fehlermeldung generiert. Darüber hinaus ist es bekannt, einen Batterieladestand (englisch "state of charge", SoC) zu überprüfen und gegebenenfalls das Einschalten des Schweißgerätes insgesamt zu verhindern, wenn der Ladezustand zu niedrig ist.

Hierbei verbleibt das Problem, dass es unerwünscht ist, wenn ein Schweißvorhaben unvollendet abgebrochen werden muss, beispielsweise, weil sich während des Vorhabens ergibt, dass die Batterie nicht dazu in der Lage ist, alle Anforderungen zu erfüllen. Insbesondere bei zeitkritischen Anwendungen kann es hierdurch zu Folgeproblemen und zu Störungen in Abläufen sowie zu schlechteren Schweißleistungen führen, welche mitunter auch Materialausschuss bewirken können.

### Zusammenfassung der Erfindung

Es ist somit eine Aufgabe der vorliegenden Erfindung, ein verbessertes Schweißsystem mit einem batteriebetriebenen Schweißgerät bereitzustellen, bei welchem insbesondere Funktionen des Schweißgeräts in Abhängigkeit davon zugelassen oder gesperrt werden, inwiefern das Schweißgerät diese Funktionen zur Zufriedenheit, das heißt gemäß vorbestimmter Kriterien, erfüllen kann. Darüber hinaus ist es eine weitere Aufgabe, ein Verfahren zum Betreiben mindestens eines batteriebetriebenen Schweißgeräts bereitzustellen, insbesondere zum Betreiben einer Schweißgeräte-Flotte.

Dementsprechend wird, gemäß einem ersten Aspekt der vorliegenden Erfindung, ein Schweißsystem bereitgestellt. Das Schweißsystem weist zumindest ein batteriebetriebenes Schweißgerät, eine Recheneinrichtung und eine Steuereinrichtung auf.

Das batteriebetriebene Schweißgerät umfasst eine Batterie und/oder eine Batterieaufnahmevorrichtung zur Aufnahme einer Batterie sowie eine Sensoreinrichtung, welche zum regelmäßigen oder kontinuierlichen Ermitteln eines Werts mindestens eines Betriebsparameters der Batterie des batteriebetriebenen Schweißgeräts eingerichtet ist. Ein regelmäßiges Ermitteln kann beispielsweise zyklisch durchgeführt werden, in Abständen, die für jeden Betriebsparameter unterschiedlich sein können. Ein kontinuierliches Ermitteln kann insbesondere während des Betriebs des Schweißgeräts durchgeführt werden, d.h. etwa während die Schweißstromquelle eingeschaltet ist. Es ist auch möglich, dass für einen Betriebsparameter bei ausgeschalteter Schweißstromquelle zyklisch und bei eingeschalteter Schweißstromquelle kontinuierlich gemessen wird. Ein regelmäßiges Ermitteln kann auch eventgetriggert erfolgen, beispielsweise vor jeder Schweißung.

Die Recheneinrichtung ist dazu eingerichtet, basierend auf den ermittelten Werten mindestens eine zeitliche Verlaufskurve zu ermitteln. Die Verlaufskurven können den oder die Betriebsparameter, deren Werte ermittelt werden, selbst beschreiben und/oder davon abgeleitete Betriebsparameter beschreiben. Die Werte können hierzu durch die Sensoreinrichtung mit Zeitstempeln aufgenommen werden, oder es kann vorgesehen sein, dass die Recheneinrichtung die von der Sensoreinrichtung empfangenen Werte zum Empfangszeitpunkt mit Zeitstempeln versieht.

Die Steuereinrichtung ist dazu eingerichtet, basierend auf der mindestens einen zeitlichen Verlaufskurve den Zugang zu mindestens einer Funktion festzulegen, insbesondere mindestens eine Funktion des batteriebetriebenen Schweißgeräts zu sperren, freizugeben oder zu modifizieren. Zum Erzeugen der zeitlichen Verlaufskurve für einen Betriebsparameter werden beispielsweise Tupel in der Form "(Wert des Betriebsparameters, Zeitstempel)" geordnet aneinandergereiht. Bei manchen Varianten kann lediglich die Auswahl zwischen "Sperren" und "Freigeben" vorgesehen sein.

Eine grundlegende Idee der vorliegenden Erfindung besteht darin, dass in einem Schweißsystem geprüft wird, ob eine bestimmte Funktion (aktuell und tatsächlich) in gewünschter Weise bereitstellbar ist, und dass insbesondere basierend darauf entschieden wird, ob die Funktion bereitgestellt wird (oder werden soll oder muss), gesperrt wird (oder gesperrt werden soll oder muss), oder modifiziert wird (oder modifiziert werden soll oder muss).

Bei mindestens einer Funktion (oder sogar bei allen) kann es sich um ein Schweißprofil handeln, d.h. eine Sequenz von Anweisungen an eine Schweißstromquelle, eine Drahtvorschubeinrichtung etc., eine Schweißung mit vorbestimmten Parametern (Schweißstrom, Schweißspannung, Drahtvorschubgeschwindigkeit) in einer vorbestimmten zeitlichen Abfolge (oft zyklisch oder mit zyklischer Komponente) durchzuführen. Schweißprofile können Dauerschweißprofile, Schweißstartprofile und/oder dergleichen umfassen.

Die Sensoreinrichtung kann dabei mindestens einen Sensor, bevorzugt eine Vielzahl von Sensoren, umfassen, welche für verschiedene Betriebsparameter und/oder physikalische Größen jeweils aktuelle Werte sensieren, das heißt bestimmen können. Mehrere Sensoren, welche dieselbe physikalische Größe oder denselben Betriebsparameter messen, können beispielsweise an verschiedenen Stellen angeordnet werden, um ein ganzheitlicheres Bild des Zustands der Batterie des batteriebetriebenen Schweißgerätes erstellen zu können. Dabei kann vorgesehen sein, dass die Messwerte einzelner Sensoren zu abgeleiteten Größen zusammengefasst werden, beispielsweise zu Mittelwerten, Medianen und dergleichen, und/oder dass die Rohdaten der einzelnen Sensoren verwendet werden.

Die Recheneinrichtung und/oder die Steuereinrichtung kann beispielsweise einen Mikroprozessor, eine zentrale Prozessoreinheit, CPU, eine Graphikprozessoreinheit, GPU, eine anwendungsspezifische integrierte Schaltung, ASIC, ein feldprogrammierbares Logikgatter, FPGA, aufweisen und/oder dergleichen mehr. Des Weiteren kann die Recheneinrichtung und/oder die Steuereinrichtung einen nicht-flüchtigen Datenspeicher aufweisen, beispielsweise eine Festplatte oder einen magnetischen Speicher wie etwa ein Festkörperlaufwerk (Solid State Drive, SSD). Die Recheneinrichtung und/oder die Steuereinrichtung kann auch einen Arbeitsspeicher aufweisen (RAM, Random Access Memory). Die Recheneinrichtung und/oder die Steuereinrichtung kann auch ganz oder teilweise durch eine Cloud-Rechenplattform und/oder einen fernverbundenen Server implementiert sein. Die Kommunikation kann über eine entsprechende Schnittstelle erfolgen, beispielsweise eine Ethernet-Schnittstelle, welche drahtgebunden oder drahtlos (WiFi) ausgebildet sein kann, eine Funkschnittstelle und/oder dergleichen mehr.

Die Recheneinrichtung und die Steuereinrichtung können auch gemeinsam implementiert oder ineinander integriert ausgeführt sein. Beispielsweise können sowohl die Recheneinrichtung als auch die Steuereinrichtung mittels Software realisiert sein, welche durch ein und dieselbe Hardware (oder teilweise gemeinsam genutzte Hardware) ausgeführt wird. Wie im Vorangehenden beschrieben wurde, kann die entsprechende Hardware CPUs, GPUs, FPGAs, ASICs, GPUs, RAM, ROM, Flashspeicher, nichtflüchtigen Speicher und dergleichen mehr in operativer Kopplung aufweisen. Die Unterteilung in Recheneinrichtung und Steuereinrichtung kann daher in manchen Ausführungsformen lediglich funktionaler Natur sein bzw. lediglich zur einfacheren Beschreibung dienen.

Durch die Verwendung der mindestens einen zeitlichen Verlaufskurve, bevorzugt mehrerer zeitlicher Verlaufskurven für mehrere Betriebsparameter oder davon abgeleitete Parameter, kann in viel präziserer Weise auf den tatsächlichen internen Zustand des Schweißgeräts und/oder der Batterie geschlossen werden. Statt, dass wie im Stand der Technik, lediglich punktuelle Werte berücksichtigt werden, wird die zeitliche Performance des Schweißgeräts und/oder speziell der Batterie berücksichtigt, um festzustellen, inwiefern die Batterie dazu in der Lage ist, mindestens eine Funktion des batteriebetriebenen Schweißgerätes tatsächlich bereitzustellen.

Die Recheneinrichtung kann insbesondere ermitteln, für jede Funktion einer Liste von durch das Schweißgerät bereitstellbaren Funktionen, in welchem Maße diese entsprechende Funktion aktuell tatsächlich bereitstellbar ist (und optional zusätzlich, welche Faktoren eintreffen müssen, damit die Funktion bereitstellbar wird). Beispielsweise kann geprüft werden, ob die Funktion bereitstellbar ist oder nicht.

In Varianten, oder beispielsweise für einzelne Funktionen, kann auch geprüft werden, zu welchem Grad eine Funktion bereitstellbar ist, beispielsweise wenn eine Funktion verschiedene Gütestufen aufweist. Die Prüfung durch die Recheneinrichtung kann auch umfassen, wie lange eine Funktion bereitgestellt werden kann, beispielsweise eine wie lange Schweißnaht mit aktuellen Einstellungen gemäß einer Funktion geschweißt werden kann und ob dies beispielsweise mit einer vorbestimmten geforderten Länge der Schweißnaht übereinstimmt. Je nach Ausführungsvariante, je nach Funktion und/oder je nach konkreter Einstellung kann vorgesehen sein, dass bestimmte Funktionen gesperrt, freigegeben und/oder modifiziert werden.

Das Sperren einer Funktion kann bedeuten, dass diese Funktion durch das Schweißgerät zunächst nicht durchgeführt werden kann. Das Freigeben kann bedeuten, dass eine Funktion durchgeführt werden kann und das Modifizieren kann bedeuten, dass Einstellungen der Funktion so verändert werden, dass die Funktion bereitgestellt werden kann.

Es kann vorgesehen sein, dass an dem Schweißsystem oder an dem Schweißgerät Benutzer mit unterschiedlichen Benutzerrechten angemeldet werden können. Die Steuereinrichtung kann so eingerichtet sein, dass sie basierend auf den Benutzerrechten unterschiedlich agiert. Beispielsweise kann vorgesehen sein, dass eine bestimmte Funktion für Benutzer mit geringeren Benutzerrechten (welche normalerweise mit einer geringeren Erfahrung oder geringeren Verantwortung einhergehen) bei Vorliegen von bestimmten Bedingungen gesperrt wird, während bei Vorliegen derselben Bedingungen dieselbe Funktion für einen Benutzer mit anderen Benutzerrechten lediglich modifiziert oder sogar vollständig freigegeben wird.

Außer den Benutzerrechten eines Benutzers ist es auch möglich, dass die Steuereinrichtung zusätzlich auch persönliche Parameter eines Benutzers berücksichtigt, beispielsweise eine durchschnittliche, minimale oder maximale Schweißgeschwindigkeit, generell oder im Zusammenhang mit der entsprechenden Funktion. Solche persönlichen Parameter können in einem Nutzerprofil des Benutzers hinterlegt sein. Solche Nutzerprofile können beispielsweise in einer Datenbank des Schweißsystems abgespeichert sein, welche vorteilhaft durch einen zentralen Server oder auf einer Cloud-Rechenplattform realisiert ist. Auf diese Weise können, über eine entsprechende Schnittstelle, die Recheneinrichtungen und/oder Steuereinrichtungen verschiedener batteriebetriebener Schweißgerät gemäß der vorliegenden Erfindung auf ein und dieselbe Datenbank zugreifen.

Bei der Entscheidung, ob eine (bzw. ob jede einzelne) Funktion zu sperren, freizugeben oder zu modifizieren ist, kann jeweils auf einem oder mehreren der folgenden Daten basieren:
- mindestens einer zeitlichen Verlaufskurve;
- mindestens einem aktuellen Wert eines Betriebsparameters (wobei dieser auch als - letzter - Teil der zeitlichen Verlaufskurve angesehen werden kann);
- zusätzlichen Informationen (beispielsweise als Teil einer Anforderung einer Funktion), insbesondere über eine aktuelle Konfiguration und/oder Ausstattung des Schweißgeräts (z.B. Elektrodenmaterial, Elektrodendurchmesser, Schutzgas, etc.) und/oder über Details eines geplanten Schweißvorgangs, z. B. Werkstück, Werkstückmaterial, geplante Schweißnahtlänge, geplante Anzahl von zu schweißenden Schweißnähten etc., und/oder
- mindestens einer Reaktion der Batterie auf ein Test-Lastprofil, insbesondere ein funktionsspezifisches Test-Lastprofil.

Weitere bevorzugte Weiterentwicklungen, Varianten und Vorteile ergeben sich aus den Unteransprüchen sowie aus der Beschreibung unter Bezugnahme auf die Figuren.

Gemäß einigen bevorzugten Ausführungsformen, Weiterentwicklungen oder Varianten von Ausführungsformen wird für jeden Betriebsparameter, für welchen durch die Sensoreinrichtung Werte ermittelt werden, eine (eigene) zeitliche Verlaufskurve bestimmt. Alternativ oder zusätzlich kann vorgesehen werden, dass auch für abgeleitete Parameter, welche aus den durch die Sensoreinrichtung direkt ermittelten Werten berechnet oder abgeleitet werden, Verlaufskurven ermittelt werden. Umfasst die Sensoreinrichtung beispielsweise mehrere Temperatursensoren (oder: Temperaturfühler), kann für jeden Temperatursensor eine eigene zeitliche Verlaufskurve bestimmt werden. Zusätzlich oder alternativ kann aber auch aus mehreren, beispielsweise allen, der Temperatursensorwerten ein Mittelwert berechnet werden, für welchen eine zeitliche Verlaufskurve bestimmt wird. Die Gesamtheit der zeitlichen Verlaufskurven ermöglicht eine umfassende Betrachtung der vorhergehenden internen Zustände des batteriebetriebenen Schweißgeräts und somit auch eine akkurate Vorhersage bezüglich der Durchführbarkeit oder des Grads einer Durchführbarkeit von einer oder mehreren Funktionen durch das batteriebetriebene Schweißgerät aktuell oder in der Zukunft.

Gemäß einigen bevorzugten Ausführungsformen, Weiterentwicklungen oder Varianten von Ausführungsformen umfasst der mindestens eine Betriebsparameter, für welchen regelmäßig oder kontinuierlich dessen Wert ermittelt wird, mindestens einen der folgenden Betriebsparameter:
- eine Temperatur an einer Position der Batterie, insbesondere eine Temperatur einer Zelle der Batterie, besonders bevorzugt mindestens eine Temperatur für jede Zelle der Batterie;
- eine Umgebungstemperatur der Batterie;
- eine Ansaugtemperatur eines Batterielüfters;
- einen Ladezustand, SOC, der Batterie;
- einen gesamten Innenwiderstand der Batterie;
- einen Innenwiderstand einer Zelle der Batterie, besonders bevorzugt jeder Zelle der Batterie;
- einen Alterungszustand der Batterie;
- eine geschätzte verbleibende Lebensdauer der Batterie;
- eine Betriebsart der Batterie;
- einen elektrischen Strom durch die Batterie;
- eine maximale, durch die Batterie bereitstellbare elektrische Leistung;
- einen Betriebszustand eines Kühlsystems der Batterie und/oder des batteriebetriebenen Schweißgeräts;
- eine durch die Batterie bereitgestellte Spannung; und/oder
- mindestens eine durch eine Zelle der Batterie bereitgestellte Einzelspannung.

Bevorzugt wird die Temperatur an jeder Zelle der Batterie gemessen (das heißt der Wert der Temperatur ermittelt), optional kann zusätzlich ein Mittelwert über die Zellen der Batterie berechnet werden. Auch Temperaturdifferenzen (als abgeleitete Betriebsparameter) können gemessen werden.

Es ist außerdem vorteilhaft, sämtliche Einzelspannungen der einzelnen Zellen der Batterie zu messen. Auf diese Weise können abgeleitete Betriebsparameter abgeleitet werden, etwa Spannungsdifferenzen zwischen den Zellen, eine Maximalspannung über alle Zellen, eine Minimalspannung über alle Zellen, sowie ein Maß dafür, ob die einzelnen Zellen ausbalanciert sind.

Es versteht sich, dass zusätzlich zu dem mindestens einen Betriebsparameter der Batterie auch mindestens ein Betriebsparameter des batteriebetriebenen Schweißgeräts selbst verwendet werden kann, d.h. es können Werte ermittelt und darauf basierend zeitliche Verlaufskurven ermittelt werden.

Die Umgebungstemperatur beispielsweise kann Auswirkungen auf einen Lüfter des batteriebetriebenen Schweißgeräts haben. Ist etwa die Außentemperatur sehr hoch, dann kann beispielsweise nicht so lange geschweißt werden, da die Batteriezellentemperatur dann schneller steigt, als wenn kühlere Außentemperatur zum Lüften/Kühlen verwendet wird. Somit kann es (schneller) zu einer Überhitzung von Batteriezellen kommen.

Aus denselben Gründen kann ein aktueller Betriebszustand eines Kühlsystems wichtig sein, wobei dieser etwa Informationen umfassen kann wie: Lüfter aktiv/inaktiv, Lüftergeschwindigkeit, Wasserkühlung aktiv/inaktiv, Temperatur des Kühlwassers, Heizung aktiv/inaktiv, Solltemperatur, Ist-Temperatur und/oder dergleichen.

Gemäß einigen bevorzugten Ausführungsformen, Weiterentwicklungen oder Varianten von Ausführungsformen ist die Sensoreinrichtung dazu eingerichtet, den Wert mindestens eines des mindestens einen Betriebsparameters mit einer Abtastrate von mindestens 100 Hz (Hertz) zu ermitteln. Es kann vorgesehen sein, dass alle Betriebsparameter mit derselben Abtastrate ermittelt werden. Alternativ kann auch vorgesehen sein, dass unterschiedliche Betriebsparameter mit unterschiedlichen Abtastraten abgetastet bzw. ermittelt werden, beispielsweise basierend darauf, wie schnell sich diese Betriebsparameter üblicherweise ändern. Umfasst die Batterie beispielsweise 16 Einzelzellen, kann vorgesehen sein, dass ein Messzyklus, in welchem die Temperatur jeder der Zellen einmal gemessen wird, innerhalb von 10 ms (Millisekunden) abgeschlossen ist, besonders bevorzugt innerhalb von 5 ms abgeschlossen ist.

Eine erhöhte Abtastrate bei den Betriebsparametern, insbesondere den schnell veränderlichen Betriebsparametern, ermöglicht eine besonders genaue Analyse des inneren Zustands des batteriebetriebenen Schweißgeräts und somit auch eine besonders akkurate Vorhersage über die Bereitstellbarkeit von Funktionen durch das batteriebetriebene Schweißgerät.

Gerade bei Schweißgeräten werden oft hochdynamische Schweißprofile benötigt, d.h. Schweißsequenzen, welche starke Veränderungen in kurzer Zeit von Schweißspannung, Schweißstrom etc. erfordern. Hohe Abtastraten ermöglichen es, akkurat zu prognostizieren ob die Funktion "Schweißprofil X" bereitstellbar ist oder nicht.

Gemäß einigen bevorzugten Ausführungsformen, Weiterentwicklungen oder Varianten von Ausführungsformen wird basierend auf der mindestens einen zeitlichen Verlaufskurve, welche bestimmt wurde, ermittelt, ob mindestens eine Funktion des batteriebetriebenen Schweißgeräts in vorbestimmter Weise (oder: nach vorbestimmten Anforderungskriterien) bereitstellbar ist. Bei der vorbestimmten Weise kann es sich beispielsweise um Anforderungen handeln, zu welchem Prozentsatz eine Funktion bereitstellbar sein muss, mit welcher Güteklasse die Funktion bereitstellbar sein muss, mit welcher Leistung die Funktion bereitstellbar sein muss, wie lange die Funktion bereitstellbar sein muss, und dergleichen mehr. Falls das Ermitteln ergibt, dass die Funktion nicht in der vorbestimmten Weise durch das Schweißgerät bereitstellbar ist, wird die entsprechende Funktion beispielsweise gesperrt.

Es kann vorgesehen sein, dass regelmäßig oder kontinuierlich für alle prinzipiell durch das Schweißgerät bestellbaren Funktionen ermittelt wird, ob jede einzelne dieser Funktionen aktuell bereitstellbar ist oder nicht. Alternativ oder zusätzlich kann auch auf eine Anforderung einer Funktion hin ermittelt werden, ob diese Funktion aktuell durch das Schweißgerät bereitstellbar ist. Eine solche Anforderung kann beispielsweise ergeben, wenn ein Benutzer über eine Schnittstelle (z. B. eine Benutzerschnittstelle, insbesondere eine graphische Benutzerschnittstelle wie etwa einen Touchscreen) des Schweißgeräts eingibt, dass eine bestimmte Funktion nun bereitgestellt werden soll, beispielsweise indem eine bestimmte Einstellung getätigt wird oder indem ein Menü aufgerufen wird, in dem die Funktion anwählbar wäre, wenn sie bereitgestellt würde.

Gemäß einigen bevorzugten Ausführungsformen, Weiterentwicklungen oder Varianten von Ausführungsformen wird basierend auf der mindestens einen zeitlichen Verlaufskurve ermittelt, ob mindestens eine Funktion des batteriebetriebenen Schweißgeräts in vorbestimmter Weise bereitstellbar ist, und es wird ein Parameter der entsprechenden Funktion automatisch darauf basierend derart angepasst, dass die Funktion bereitstellbar ist. Optional wird die Funktion daraufhin automatisch bereitgestellt. Das Ermitteln, ob die Funktion bereitstellbar ist, kann durch die Recheneinrichtung erfolgen, und das Anpassen des mindestens einen Parameters der entsprechenden Funktion kann durch die Steuereinrichtung erfolgen. Das Anpassen eines Parameters einer Funktion kann beispielsweise bedeuten, dass die Funktion mit einem veränderten Strom- und/oder Spannungsprofil durchgeführt wird, dass eine Zeit verringert oder erhöht wird, oder dergleichen mehr. Auf diese Weise kann sichergestellt werden, dass, einen entsprechenden Wunsch des Benutzers vorausgesetzt, eine Funktion zumindest in irgendeiner Art und Weise durchgeführt werden kann.

Gemäß einigen bevorzugten Ausführungsformen, Weiterentwicklungen oder Varianten von Ausführungsformen weist die Steuereinrichtung eine künstliche-Intelligenz-Entität auf. Dabei kann es sich beispielsweise um ein künstliches neuronales Netzwerk oder dergleichen handeln. Die künstliche-Intelligenz-Entität kann dazu trainiert und eingerichtet sein, als Eingabe die mindestens eine bestimmte zeitliche Verlaufskurve zu erhalten und darauf basierend eine Ausgabe zu erzeugen. Die Steuereinrichtung kann dazu ausgelegt und eingerichtet sein, basierend auf dieser Ausgabe mindestens eine Funktion des batteriebetriebenen Schweißgeräts zu sperren, freizugeben und/oder zu modifizieren. In einem einfachen Fall kann die Ausgabe der künstlichen-Intelligenz-Entität bereits selbst ein Steuersignal sein.

In anderen Fällen kann vorgesehen sein, dass die Ausgabe durch die Recheneinrichtung ausgewertet wird und die Steuereinrichtung die entsprechende Steuerung dann basierend auf der Auswertung durch die Recheneinrichtung vornimmt. Künstliche-Intelligenz-Entitäten können häufig Muster erkennen, welche aufgrund ihrer Komplexität menschlichen Analysten verborgen bleiben und sind daher sehr gut geeignet, basierend auf der mindestens einen bestimmten zeitlichen Verlaufskurve, besonders bevorzugt basierend auf allen bestimmten zeitlichen Verlaufskurven, Vorhersagen zu erstellen, ob eine Funktion des Schweißgeräts gesperrt, freigegeben und/oder modifiziert werden sollte.

Das Training einer solchen künstlichen-Intelligenz-Entität kann beispielsweise umfassen, dass als Trainingsdaten Sätze von zeitlichen Verlaufskurven verwendet werden, welche dadurch annotiert sind, dass für eine oder mehrere Funktionen beschrieben ist, ob diese zu einer bestimmten Zeit bereitstellbar war oder nicht. Eine solche Annotation wird vorzugsweise für sämtliche Funktionen bereitgestellt, welche durch die künstliche-Intelligenz-Entität beurteilbar sein sollen, das heißt, für welche die künstliche-Intelligenz-Entität eine Ausgabe ausgeben soll, basierend auf welcher die Funktion sperrbar, freigebbar und/oder modifizierbar ist.

Gemäß einigen bevorzugten Ausführungsformen, Weiterentwicklungen oder Varianten von Ausführungsformen ist die Steuereinrichtung weiterhin dazu eingerichtet, eine Anforderung für eine Funktion zu erhalten und als Reaktion daraufhin die Batterie mit mindestens einem Test-Lastprofil zu beaufschlagen. Die Anforderung für die Funktion kann beispielsweise durch einen Benutzer über eine Schnittstelle, insbesondere Benutzerschnittstelle erfolgen. Alternativ oder zusätzlich kann dies auch über eine andere Schnittstelle erfolgen, beispielsweise wenn ein Schweißgerät robotergesteuert ist und/oder ferngesteuert ist, oder wenn die Anfrage an eine zentrale Schweißgeräte-Flottenmanagement-Software erfolgt, welche eine Mehrzahl von erfindungsgemäßen Schweißgeräten verwaltet.

Das Test-Lastprofil kann insbesondere ein auf die angeforderte Funktion angepasstes Test-Lastprofil sein. Es kann vorgesehen sein, dass jede Funktion ein eigenes Test-Lastprofil aufweist. Das Test-Lastprofil kann aus einem einzigen Wert bestehen, beispielsweise aus einem Leistungswert, welcher erreicht werden muss, einem Wert eines Anstiegsgradienten, welcher erreicht werden muss und/oder dergleichen mehr. Ein Test-Lastprofil kann jedoch auch eine zeitliche Abfolge umfassen, welche etwa eine Beanspruchung der Batterie (oder: eine Anforderung an die Batterie) darstellt, welcher die Batterie ausgesetzt ist, wenn die Funktion tatsächlich durchgeführt wird.

Die Sensoreinrichtung kann dazu eingerichtet sein, eine Reaktion der Batterie auf das Test-Lastprofil zu erfassen. Die Steuereinrichtung kann außerdem dazu eingerichtet sein, die mindestens eine Funktion des batteriebetriebenen Schweißgeräts zusätzlich basierend auf der Reaktion der Batterie auf das Test-Lastprofil zu sperren, freizugeben und/oder zu modifizieren.

Beispielsweise kann vorgesehen sein, dass die Funktion gesperrt wird, wenn die Reaktion der Batterie auf das Test-Lastprofil indiziert, dass die Batterie nicht dazu in der Lage ist, das angeforderte Test-Lastprofil darzustellen. Alternativ kann aus der Reaktion der Batterie auf das Test-Lastprofil auch ermittelt werden, zu welchen maximalen Leistungen, Stromstärken und/oder Spannungen die Batterie aktuell fähig ist, und daraufhin ein Parameter der entsprechenden Funktion automatisch derart angepasst werden, dass die Funktion unter diesen Umständen durch das Schweißgerät bereitstellbar ist.

Ein Test-Lastprofil kann beispielsweise dazu ausgelegt sein, eine oder mehrere der folgenden aktuellen Kenngrößen der Batterie zu bestimmen:
- den maximal bereitstellbaren elektrischen Strom;
- eine maximal bereitstellbare elektrische Leistung;
- eine maximale Flankensteilheit der elektrischen Leistung;
- eine maximale Zeitdauer für die Maximalleistung;
- eine minimale Frequenz von zu wiederholenden Leistungspulsen;
- und/oder dergleichen mehr.

Auf diese Weise können in einfacher Weise Funktionen, welche bestimmte Mindestwerte (oder Maximalwerte) für eine oder mehrere Kenngrößen erfordern, gesperrt werden, falls die Reaktion der Batterie auf das Test-Lastprofil bezüglich dieser Kenngröße negativ ausfällt, d.h. die Mindestwerte (oder Maximalwerte) nicht erreicht werden können. Somit kann ein konkretes Test-Lastprofil auch dazu geeignet sein, die Bereitstellbarkeit einer Mehrzahl von Funktionen zu prüfen

Auf diese Weise kann zu der vorher genannten Auswertung der zeitlichen Verlaufskurven, um zu entscheiden, ob eine Funktion gesperrt, freigegeben oder modifiziert werden soll, noch ein weiteres Entscheidungskriterium hinzukommen, nämlich die Reaktion auf das Test-Lastprofil. Es kann vorgesehen sein, dass die Entscheidung, ob ein Test-Lastprofil angewendet werden soll oder nicht, auf der mindestens einen zeitlichen Verlaufskurve basiert, beispielsweise, wenn die Auswertung der mindestens einen zeitlichen Verlaufskurve ergibt, dass möglicherweise ein Problem mit einer Funktion vorliegt, woraufhin das Test-Lastprofil eingesetzt wird, um dies genauer zu prüfen. Es kann außerdem vorgesehen sein, dass für beispielsweise eine Funktion die Entscheidung der Sperrung, Freigabe und/oder Modifikation ausschließlich basierend auf der mindestens einen zeitlichen Verlaufskurve erfolgt, während eine andere Funktion des batteriebetriebenen Schweißgeräts beispielsweise ausschließlich auf der Reaktion der Batterie auf ein entsprechendes Test-Lastprofil basiert. Es versteht sich, dass auch für jede Funktion einzeln festgelegt werden kann, basierend auf welchen zeitlichen Verlaufskurven die Entscheidung getroffen werden soll.

Falls eine künstliche-Intelligenz-Entität verwendet wird, kann festgelegt werden, dass diese nur für eine oder mehrere bestimmte Funktionen die Ausgabe erzeugen soll, oder es kann vorgesehen sein, dass für jede Funktion eine Ausgabe erstellt werden soll. Der künstlichen Intelligenzentität wird in der Regel die gesamte verfügbare Datenmenge bereitgestellt werden, das heißt sämtliche bestimmten zeitlichen Verlaufskurven.

Wenn keine künstliche Intelligenzentität verwendet wird, oder nicht für alle Funktionen, kann auch eine regelbasierte Entscheidung erfolgen. Regelbasierte Entscheidungen können eines oder mehrere der folgenden Bedingungen für das Sperren oder Freischalten einer Funktion aufweisen, wobei die einzelnen Bedingungen miteinander mittels Boole'scher Operatoren (AND, OR, etc.) verknüpft werden können:
- in den letzten X Zeitperioden der Verlaufskurve Y wurde ein Maximalwert von Z überschritten (oder: nicht überschritten) ;
- in den letzten X Zeitperioden der Verlaufskurve Y wurde ein Minimalwert von Q nicht überschritten (oder: nicht unterschritten);
- in den letzten X Zeitperioden der Verlaufskurve Y hat der Mittelwert M den Wert P überschritten (oder: nicht überschritten);
- in den letzten X Zeitperioden der Verlaufskurve Y hat die Varianz V um den Mittelwert M den Wert R überschritten (oder: nicht überschritten);
- und/oder dergleichen mehr.

Mehrere Bedingungen können auch mit unterschiedlichen Gewichtungen versehen werden, beispielweise in Prozentpunkten. Es kann vorgesehen sein, dass ein Benutzer über eine Schnittstelle, insbesondere eine Benutzerschnittstelle eine oder mehrere Bedingungen auswählt und/oder Gewichtungen einstellt.

Eine Regel kann somit beispielsweise besagen, dass die Funktion A nur dann bereitstellbar ist, wenn in den letzten Y Zeitperioden der Maximalwert der zeitlichen Verlaufskurve den Wert Z nicht überschreitet und den Wert W nicht unterschreitet und außerdem bei der zeitlichen Verlaufskurve Q die Varianz V um den Mittelwert den Wert P nicht überschreitet und/oder dergleichen mehr.

Die Regeln können auch auf Extrapolationen oder Prognosen beruhen, welche basierend auf der mindestens einen zeitlichen Verlaufskurve erzeugt werden, beispielsweise durch die Recheneinrichtung. Eine Extrapolation für einen Betriebsparameter kann mit einem entsprechenden Schwellwert verglichen werden, wobei bei einem negativen Ergebnis des Vergleichs die entsprechende Funktion gesperrt wird (oder, in Varianten: gesperrt oder nach Benutzerwunsch modifiziert wird).

Beispielsweise kann basierend auf einem aktuellen Temperaturwert der Batterie (oder einem maximalen Temperaturwert einer der Zellen der Batterie etc.) und/oder basierend auf der zeitlichen Verlaufskurve dieses Temperaturwerts bestimmt werden, dass während oder nach Durchführung einer (z.B. angeforderten) Funktion die Batterie eine Übertemperatur aufweist, und die Funktion deswegen aktuell zu sperren ist.

Ebenso könnte prognostiziert werden, dass während oder nach Durchführung (oder: Bereitstellung) der Funktion eine Unterspannung der Batterie (oder einer Zelle der Batterie) vorliegt, eine zu hohe Last vorliegt, und/oder dergleichen mehr.

Die Prognose kann auch beinhalten, ob eine bestimmte Funktion überhaupt aktuell technisch bereitstellbar ist, also etwa, ob eine Schweißung mit den Parametern dieser Funktion aktuell überhaupt gezündet werden kann.

Gemäß einigen bevorzugten Ausführungsformen, Weiterentwicklungen oder Varianten von Ausführungsformen umfasst die mindestens eine Funktion des batteriebetriebenen Schweißgeräts mindestens eine der folgenden umfasst:
- das Zünden eines Schweißlichtbogens;
- das Ausgeben eines (vorgegebenen, z.B. angeforderten) Schweißprofils; und/oder
- das vollständige Durchführen einer geplanten Schweißaufgabe.

Eine Schweißaufgabe kann beispielsweise aus einem Elektrodenschweißen für x Minuten (z. B. 4 Minuten) bestehen (oder ein solches umfassen), wobei, wenn festgestellt wird, dass aktuell nur ein Elektrodenschweißen für y<x Minuten möglich ist (z. B. nur für 2 Minuten), somit diese Schweißaufgabe nicht vollständig durchgeführt werden kann.

Eine Schweißaufgabe kann weiters beispielsweise aus einem Elektrodenschweißen über eine Schweißnahtlänge von x Zentimetern (z.B. 375 cm) bestehen (oder ein solches umfassen), wobei, wenn festgestellt wird, dass aktuell nur eine Elektrodenschweißen für y<x cm möglich ist (z. B. nur für 210 cm), somit diese Schweißaufgabe nicht vollständig durchgeführt werden kann.

Gemäß einigen bevorzugten Ausführungsformen, Weiterentwicklungen oder Varianten von Ausführungsformen sind die Recheneinrichtung und/oder die Steuereinrichtung in das Schweißgerät integriert. Besonders bevorzugt sind alle Bestandteile des erfindungsgemäßen Schweißsystems in das batteriebetriebene Schweißgerät integriert.

Die Erfindung stellt demnach auch ein batteriebetriebenes Schweißgerät bereit, umfassend:
- eine Batterie und/oder eine Batterieaufnahmevorrichtung zur Aufnahme einer Batterie;
- eine Sensoreinrichtung, welche zum regelmäßigen oder kontinuierlichen Ermitteln eines Werts mindestens eines Betriebsparameters der Batterie des batteriebetriebenen Schweißgeräts eingerichtet ist;
- eine Recheneinrichtung, welche dazu eingerichtet ist, basierend auf den ermittelten Werten mindestens eine zeitliche Verlaufskurve zu bestimmen; und
- eine Steuereinrichtung, welche dazu eingerichtet ist, basierend auf der mindestens einen zeitlichen Verlaufskurve mindestens eine Funktion des batteriebetriebenen Schweißgeräts zu sperren, freizugeben oder zu modifizieren.

Batterie oder Batterieaufnahmevorrichtung, Sensoreinrichtung und/oder Steuereinrichtung können insbesondere in ein Gehäuse einer Schweißstromquelle des Schweißgeräts integriert sein. Die Sensoreinrichtung kann in die/mit der Batterie integriert ausgebildet sein, beispielsweise als ein oder in ein Batteriemanagementsystem (BMS) des batteriebetriebenen Schweißgeräts.

Gemäß einem dritten Aspekt stellt die Erfindung ein Verfahren zum Betreiben mindestens eines batteriebetriebenen Schweißgeräts (insbesondere eines erfindungsgemäßen Schweißgeräts) bereit, mit den Schritten:
- regelmäßiges oder kontinuierliches Ermitteln eines Werts mindestens eines Betriebsparameters einer Batterie des batteriebetriebenen Schweißgeräts;
- Ermitteln, basierend auf den ermittelten Werten, mindestens einer zeitlichen Verlaufskurve; und
- Festlegen eines Zugangs zu einer Funktion des batteriebetriebenen Schweißgeräts basierend auf der mindestens einen zeitlichen Verlaufskurve, insbesondere Sperren, Freigeben, oder Modifizieren einer solchen Funktion.

Das Verfahren gemäß Ausführungsformen des dritten Aspekts der Erfindung kann insbesondere mit dem Schweißsystem und/oder dem Schweißgerät gemäß Ausführungsformen des ersten oder zweiten Aspekts der Erfindung durchgeführt werden und kann dementsprechend gemäß allen in Bezug auf das Schweißsystem oder das Schweißgerät beschriebenen Varianten, Modifikationen, Weiterentwicklungen oder Ergänzungen angepasst werden und umgekehrt. Das Verfahren kann jedoch auch unabhängig durchgeführt werden.

Gemäß einigen bevorzugten Ausführungsformen, Weiterentwicklungen oder Varianten von Ausführungsformen umfasst das erfindungsgemäße Verfahren außerdem den Schritt: Erhalten einer Anforderung einer bestimmten Funktion des batteriebetriebenen Schweißgeräts, welche Funktion daraufhin durch mindestens eines des mindestens einen batteriebetriebenen Schweißgeräts gesperrt, freigegeben und/oder modifiziert wird.

Beispielsweise kann die Anforderung bei einer Vielzahl von batteriebetriebenen Schweißgeräten erhalten werden, welche jeweils automatisch dann die genannten Schritte durchführen, um die entsprechende Funktion zu sperren, freizugeben oder zu modifizieren. Ein Benutzer kann dann dementsprechend entscheiden, welches der Schweißgeräte für die Funktion verwendet werden soll. Das Sperren einer Funktion durch ein Schweißgerät kann umfassen, dass in der genannten Konstellation das Schweißgerät auf die Anforderung hin meldet, dass das Schweißgerät für diese Funktion nicht zur Verfügung steht, während umgekehrt ein Freischalten bedeuten kann, dass das Schweißgerät meldet, dass es für diese Funktion zur Verfügung steht.

Wenn die Funktion lediglich vorhersieht, dass sie bereitstellbar oder nicht bereitstellbar ist, kann der Benutzer entsprechend ein Schweißgerät wählen, durch das die Funktion bereitstellbar ist. Weist die Funktion verschiedene Grade auf, gemäß welchen sie bereitstellbar sein kann, kann der Benutzer dasjenige Schweißgerät auswählen, welches die Funktion aktuell zum größten Grad bereitstellen kann oder entscheiden, ob der maximale bereitstellbare Grad oder Umfang der Funktion für die Zwecke des Benutzers ausreichend ist.

Gemäß einigen weiteren bevorzugten Ausführungsformen, Weiterentwicklungen oder Varianten von Ausführungsformen umfasst das Verfahren außerdem die Schritte:
- Übermitteln der Anforderung der bestimmten Funktion an eine Vielzahl von batteriebetriebenen Schweißgeräten nach einer Ausführungsform des ersten Aspekts der vorliegenden Erfindung; und
- Bestimmen eines batteriebetriebenen Schweißgeräts, durch welches die angeforderte Funktion freigegeben oder freigebbar ist. Beispielsweise kann der Benutzer in einer Schweißgeräte-Flottenmanagement-Software die gewünschte Funktion, gegebenenfalls den gewünschten Mindestgrad der Funktion, eingeben, und daraufhin automatisch eine Liste erhalten, welche Schweißgeräte der Flotte von Schweißgeräten diese Funktion aktuell bereitstellen können, das heißt, durch welche der Schweißgeräte die angeforderte Funktion aktuell freigegeben oder freigebbar ist.

Gemäß einigen bevorzugten Ausführungsformen, Weiterentwicklungen oder Varianten von Ausführungsformen umfasst das Verfahren außerdem die Schritte:
- Beaufschlagen, als Reaktion auf die Anforderung der bestimmten Funktion, der Batterie mindestens eines batteriebetriebenen Schweißgeräts mit mindestens einem Test-Lastprofil, und
- Erfassen einer Reaktion der Batterie auf das Test-Lastprofil, wobei das Sperren, Freigeben und/oder Modifizieren der Funktion des batteriebetriebenen Schweißgeräts zusätzlich basierend auf der Reaktion der Batterie auf das Test-Lastprofil erfolgt.

Wie bereits im Vorangehenden beschrieben worden ist, kann auch vorgesehen sein, dass für manche Funktionen das Sperren/Freigeben/Modifizieren ausschließlich basierend auf den ermittelten zeitlichen Verlaufskurven erfolgt und dass für eine oder mehrere weitere Funktionen das Sperren/Freigeben/Modifizieren ausschließlich basierend auf der Reaktion der Batterie auf das Test-Lastprofil erfolgt. Wie ebenfalls bereits beschrieben wurde, kann das Bestimmen, ob ein Sperren, Freigeben und/oder Modifizieren erfolgen soll, beispielsweise unter Verwendung einer künstlichen Intelligenzentität erfolgen.

Gemäß einem vierten Aspekt stellt die Erfindung ein Verfahren zum Trainieren einer künstlichen Intelligenzentität bereit, wobei eine künstliche Intelligenzentität bereitgestellt wird, und mit Trainingsdaten trainiert wird, welche jeweils mindestens eine zeitliche Verlaufskurve mindestens eines Betriebsparameters der Batterie eines batteriebetriebenen Schweißgerätes umfassen sowie eine Annotation, zu welchen Zeitpunkten mindestens eine Funktion des batteriebetriebenen Schweißgerätes bereitstellbar oder nicht bereitstellbar war. Das Trainieren der künstlichen Intelligenzentität, welche insbesondere ein neuronales Netzwerk sein kann oder ein neuronales Netzwerk umfassen kann, kann vorzugsweise gemäß im Stand der Technik bekannten Verfahren erfolgen.

Weitere bevorzugte Ausführungsformen, Varianten und Weiterbildungen von Ausführungsformen ergeben sich aus den Unteransprüche sowie aus der Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Die teilweise schematisierte Darstellung zeigen hierbei:
- Fig. 1: ein schematisches Blockschaltbild eines Schweißsystems sowie eines batteriebetriebenen Schweißgerätes gemäß Ausführungsformen der vorliegenden Erfindung;
- Fig. 2: ein schematisches Blockschaltbild eines Schweißsystems gemäß einer weiteren Ausführungsform der vorliegenden Erfindung;
- Fig. 3: ein schematisches Blockschaltbild eines Schweißsystems gemäß noch einer weiteren Ausführungsform der vorliegenden Erfindung; und
- Fig. 4: ein schematisches Flussdiagramm zum Erläutern eines Verfahrens gemäß noch einer weiteren Ausführungsform der vorliegenden Erfindung.

### Ausführungsform der vorliegenden Erfindung.

In sämtlichen Figuren sind gleiche bzw. funktionsgleiche Elemente und Vorrichtungen - sofern nicht anders angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

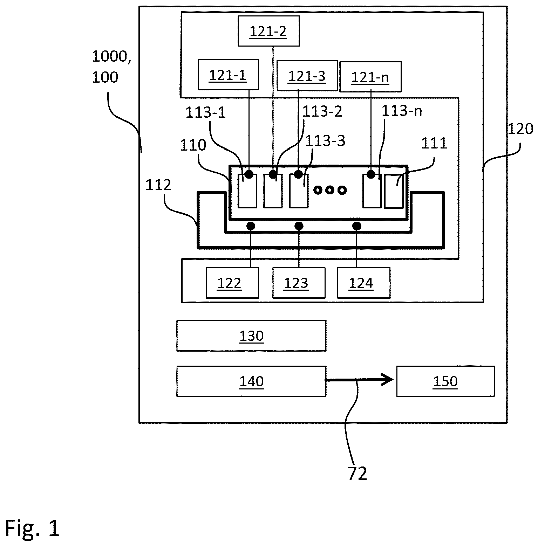

Fig. 1 zeigt ein schematisches Blockschaltbild eines Schweißsystems 1000 sowie eines batteriebetriebenen Schweißgerätes 100 gemäß Ausführungsformen der vorliegenden Erfindung.

Bei dem in Fig. 1 dargestellten Beispiel umfasst das Schweißsystem 1000 ein batteriebetriebenes Schweißgerät 100, und es sind sämtliche Elemente des Schweißsystems 1000 in das Schweißgerät 100 integriert. Anhand der nachfolgenden Figuren werden auch andere Ausführungsformen beschrieben werden, bei denen das Schweißsystem 1000 noch zusätzliche, dem Schweißgerät 100 externe Elemente aufweist.

Im Folgenden wird mit Bezug auf die Figuren im Wesentlichen beschrieben werden, wie für eine einzige Funktion eines batteriebetriebenen Schweißgerätes 100 bestimmt werden kann, ob diese gesperrt, freigegeben und/oder modifiziert werden soll. Wie im Voranstehenden jedoch bereits ausführlich erläutert wurde, kann auch vorgesehen sein, dass ein Schweißgerät 100 prinzipiell (d.h. insbesondere falls sich die Batterie in einem Idealzustand oder Sollzustand befindet) eine Vielzahl von verschiedenen Funktionen bereitstellen kann und dass für eine Mehrzahl oder auch alle dieser Funktionen jeweils einzeln bestimmt wird oder bestimmt werden kann, ob die entsprechende Funktion aktuell bereitstellbar ist und/oder zu welchem Grad die entsprechende Funktion bereitstellbar ist. Eine Kombination von Funktionen kann hierbei wiederum als eine Funktion angesehen werden. Somit kann geprüft werden, ob das Schweißverfahren A (erste Funktion) in Kombination mit dem optionalen Zusatzschritt B (zweite Funktion) bereitstellbar ist, was dem Prüfen der Bereitstellbarkeit der (neuen) Funktion A+B entspricht.

Das batteriebetriebene Schweißgerät 100 umfasst eine Batterie 110 und/oder eine Batterieaufnahmevorrichtung 112 zur Aufnahme einer Batterie 110. Die Batterieaufnahmevorrichtung 112 kann so ausgebildet sein, dass ein Austausch der Batterie 110 möglich ist. Alternativ kann auch vorgesehen sein, dass die Batterie 110 fest in dem Schweißgerät 100 integriert ist und nur im Rahmen eines Re-Fittings des Schweißgeräts 100 entnehmbar ist.

Das Schweißgerät 100 weist außerdem eine Sensoreinrichtung 120 auf, welche zum regelmäßigen (beispielsweise zyklisch oder am Anfang vor jeder Schweißung) oder kontinuierlichen Ermitteln eines Werts mindestens eines Betriebsparameters der Batterie 110 des Schweißgeräts 100 eingerichtet ist. Bevorzugt wird eine Vielzahl von Betriebsparametern überwacht, das heißt, es werden regelmäßig oder kontinuierlich Werte für eine Vielzahl von Betriebsparametern der Batterie ermittelt. Dabei kann für einen oder mehrere Betriebsparameter das Ermitteln regelmäßig und für einen oder mehrere andere Betriebsparameter der Batterie das Ermitteln kontinuierlich (während des Betriebs d.h. bei eingeschalteter Stromquelle) erfolgen, je nach dem, was für den entsprechenden Batterieparameter angemessen ist. Beispiele für mögliche Betriebsparameter wurden im Voranstehenden bereits aufgezählt und erläutert.

Die Sensoreinrichtung 120 kann beispielsweise Teil eines Batteriemanagementsystems, BMS, sein.

Wie in Fig. 1 gezeigt, kann die Batterie 110 beispielsweise eine Anzahl von n Zellen 113-1, 113-2, ..., 113-n aufweisen oder aus diesen bestehen. Die Sensoreinrichtung 120 kann für jede Zelle 113-i einen entsprechenden Temperatursensor 121-1, 121-2, ..., 121-n aufweisen, welcher dazu ausgelegt und eingerichtet ist, einen Wert der Temperatur der entsprechenden Zelle 113-i regelmäßig oder kontinuierlich zu erfassen. Die Sensoreinrichtung 120 kann in diesem Beispiel somit dazu eingerichtet sein, n Temperaturwerte zu ermitteln und/oder einen Mittelwert oder mehrere Mittelwerte oder andere abgeleitete Parameter aus den n Temperaturwerten zu berechnen.

Des Weiteren kann die Sensoreinrichtung 120 beispielsweise einen Spannungssensor 122, einen Stromsensor 123 und/oder dergleichen weitere Sensoren 124 aufweisen. Somit können Werte für Strom und Spannung als weitere Betriebsparameter oder wiederum darauf basierend abgeleitete Betriebsparameter ermittelt werden. Solche abgeleiteten Betriebsparameter können beispielsweise ein Innenwiderstand, ein Alterungszustand, eine Betriebsart, ein Ladestand (SoC) und/oder dergleichen mehr sein. Die weiteren Sensoren 124 können beispielsweise einen Beschleunigungssensor und/oder einen Drucksensor aufweisen, was z. B. Rückschlüsse auf eine Alterung der Batterie 110 oder einer Zelle 113-i der Batterie erlauben kann.

Das batteriebetriebene Schweißgerät 100 umfasst außerdem eine Recheneinrichtung 130, welche dazu eingerichtet ist, basierend auf den ermittelten Werten mindestens eine zeitliche Verlaufskurve zu bestimmen. Dabei kann bevorzugt für jeden Betriebsparameter, für welchen durch die Sensoreinrichtung 120 Werte ermittelt werden, auch eine zeitliche Verlaufskurve bestimmt werden. Ebenso kann für eine abgeleitete Größe oder bevorzugt auch für alle abgeleiteten Größen, Verlaufskurven erstellt werden.

Aus solchen Verlaufskurven sind beispielsweise zeitliche Mittelwerte für die entsprechenden Betriebsparameter auslesbar, Varianzen um den Mittelwert, Mediane, Maximalwerte und Minimalwerte und dergleichen mehr.

Das Schweißgerät 100 umfasst außerdem eine Steuereinrichtung 140, welche dazu eingerichtet ist, basierend auf der mindestens einen zeitlichen Verlaufskurve mindestens eine Funktion des batteriebetriebenen Schweißgerätes 100 zu sperren, freizugeben oder zu modifizieren. Dies kann dadurch erfolgen, dass die Steuereinrichtung 140 entsprechende Steuersignale 72 ausgibt. Auch die Steuereinrichtung 140 kann in das Batteriemanagementsystem der Batterie 110 integriert sein.

In Fig. 1 ist beispielhaft dargestellt, dass die Steuersignale 72 an eine Schnittstelle 150 (z. B. umfassend oder bestehend aus einer Benutzerschnittstelle) des Schweißsystems 1000 ausgegeben werden, welche daraufhin die entsprechenden Funktionen durch einen Benutzer beispielsweise sperrt oder freigibt. Die Schnittstelle 150 kann insbesondere einen Bildschirm aufweisen und somit eine graphische Benutzerschnittstelle aufweisen oder als eine solche ausgebildet sein.

Denkbar ist auch, dass die Steuersignale 72 direkt an eine Schweißstromquelle des Schweißsystems 1000 gesendet werden. Es ist jedoch vorteilhaft, wenn, etwa durch die Schnittstelle 150 (z. B. Benutzerschnittstelle), dem Benutzer des Schweißsystems 1000 mitgeteilt wird, ob eine durch den Benutzer angeforderte (oder: ausgewählte) Funktion freigegeben ist (d.h. bereitgestellt wird), gesperrt ist, oder modifiziert freigegeben ist.

Die Kommunikation zwischen Sensoreinrichtung 120 und Recheneinrichtung 130 und/oder zwischen Recheneinrichtung 130 und Steuereinrichtung 140 kann kontinuierlich oder zyklisch erfolgen.

Wie im Voranstehenden bereits erläutert wurde, kann auch vorgesehen sein, dass für die Beurteilung, ob eine bestimmte Funktion gesperrt, freigegeben oder modifiziert wird, Regelsysteme (beispielsweise mit Boole'schen Operatoren verknüpfte Bedingungselemente) und/oder eine Künstliche-Intelligenz-Entität verwendet werden. Für mindestens eine (oder mehrere, oder alle) Funktion kann dies durch Regelsysteme, für mindestens eine andere Funktion durch eine Künstliche-Intelligenz-Entität und/oder für eine weitere Funktion durch eine Kombination aus beidem Erfolgen.

Die Entscheidung kann jeweils ausschließlich basierend auf den bestimmten zeitlichen Verlaufskurven erfolgen, oder zusätzlich oder alternativ auch noch auf der Reaktion der Batterie auf ein Test-Lastprofil, mit welchem die Batterie beaufschlagt wird. Das Test-Lastprofil kann beispielsweise eine geforderte elektrische Leistung (z.B. für den Hotstart beim Schweißen), eine geforderte Gesamtenergie und/oder dergleichen mehr aufweisen und kann insbesondere auf mindestens eine Funktion zugeschnitten sein.

Demnach kann beispielsweise die Steuereinrichtung 140 dazu eingerichtet sein, eine Anforderung für eine Funktion zu erhalten und als Reaktion daraufhin die Batterie 110 mit mindestens einem Test-Lastprofil zu beaufschlagen. Die Anforderung für die Funktion kann beispielsweise durch einen Benutzer über die Schnittstelle 150 erfolgen. Alternativ oder zusätzlich kann dies auch über eine andere Schnittstelle erfolgen, beispielsweise wenn ein Schweißgerät robotergesteuert ist und/oder ferngesteuert ist, oder wenn die Anfrage an eine zentrale Schweißgeräte-Flottenmanagement-Software erfolgt, welche eine Mehrzahl von erfindungsgemäßen Schweißgeräten verwaltet.

Die Anforderung einer Funktion kann zusätzliche Informationen (oder: "Zusatzinformationen") enthalten, beispielsweise Informationen über ein zu verwendendes Zusatzmaterial, über ein Material des Werkstücks, aber auch über den anfordernden Benutzer oder Roboter und/oder dergleichen mehr.

Handelt es sich bei dem Schweißgerät 100 beispielsweise um ein Bolzenschweißgerät, kann eine Anforderung eine Information über einen zu verwendenden Typ von Bolzen enthalten. Das Schweißsystem 1000 kann eine Datenbank enthalten, welche die Information bereitstellt, was diese Information für Bedingungen für ein ordnungsgemäßes Bereitstellen der Funktion mit sich zieht. Beispielsweise kann aus dem Typ des Bolzens auf eine für das Schweißen jedes einzelnen Bolzens notwendige Energie geschlossen werden. Daraufhin kann durch die Steuereinrichtung 140 geprüft werden, ob die entsprechende Energie durch die Batterie 110 bereitstellbar ist, und/oder für wie viele Bolzen die Energie ausreicht. Die Anforderung könnte auch eine Information darüber enthalten, wie viele Bolzen zu schweißen sind, sodass die Entscheidung der Sperrung oder Freigabe der Funktion auch darauf basieren kann, ob die angeforderte Menge von Bolzen geschweißt werden kann (Freigabe) oder nicht (Sperrung) oder ob ein einzelner Bolzen mit der benötigten Energie geschweißt werden kann (Freigabe) oder nicht (Sperrung).

Als ein weiteres Beispiel könnte beim Elektrodenschweißen die Anforderung eine Information über eine geplante Länge einer Schweißnaht und den dafür benötigten Zusatzwerkstoff enthalten sein.

Wie in Fig. 1 dargestellt ist, können die Recheneinrichtung 130 und die Steuereinrichtung 140 in das batteriebetriebene Schweißgerät 100, und optional auch ineinander, integriert sein.

Die Steuereinrichtung 140 kann auch einen Datenspeicher 111 umfassen, welcher mindestens einen Grenzwert und/oder mindestens eine Grenzkurve für mindestens eine bestimmte zeitliche Verlaufskurve aufweist, wobei der mindestens eine Grenzwert und/oder die mindestens eine Grenzkurve von der Steuereinrichtung 140 verwendet werden, um zu entscheiden, ob die mindestens eine Funktion des batteriebetriebenen Schweißgeräts 100 zu sperren, freizugeben oder zu modifizieren ist.

Beispielsweise kann die Steuereinrichtung 140 dazu eingerichtet sein:
a) zu prüfen, ob durch (unmodifizierte) Freigabe der Funktion mindestens ein Grenzwert beim Durchführen der Funktion durch die entsprechende zeitliche Verlaufskurve erreicht (oder überschritten bei oberen Grenzwerten bzw. unterschritten bei unteren Grenzwerten) würde, und, falls nein, die Funktion unmodifiziert freizugeben und, falls ja:
b) zu prüfen, ob durch modifizierte Freigabe der Funktion der Grenzwert beim Durchführen der modifizierten Funktion nicht erreicht werden würde, und, falls ja, die Funktion zu modifizieren und modifiziert freizugeben, und, falls nein,
c) die Funktion zu sperren.

Der Datenspeicher 111 kann beispielsweise in die Batterie 110 und/oder ein Batteriemanagementsystem der Batterie 110 integriert sein.

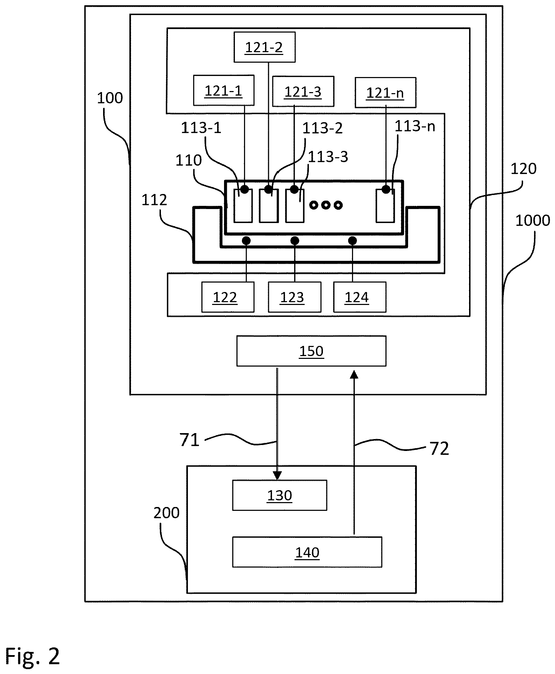

Fig. 2 zeigt schematisch ein Blockschaltbild einer weiteren Ausführungsform. Bei dem Schweißsystem 1000 gemäß Fig. 2 sind die Recheneinrichtung 130 und/oder die Steuereinrichtung 140 außerhalb des batteriebetriebenen Schweißgeräts 100 angeordnet.

Diese können beispielsweise durch eine Cloud-Computing-Plattform, einen zentralen Server 200 und/oder dergleichen realisiert sein.

Das batteriebetriebene Schweißgerät 100 kann hierzu eine Schnittstelle 150 aufweisen, welche dazu ausgelegt ist, die durch die Sensoreinrichtung 120 ermittelten Werte 71 roh oder in einem vorverarbeiteten Zustand an die Recheneinrichtung 130 zu übertragen.

In Varianten, bei denen auch die Steuereinrichtung 140 außerhalb des Schweißgeräts 100 angeordnet ist, kann die Schnittstelle 150 außerdem dazu eingerichtet sein, Steuersignale 72 der Steuereinrichtung 140 zu erhalten, welche das Sperren, Freigeben oder Modifizieren mindestens einer Funktion des batteriebetriebenen Schweißgeräts 100 in dem Schweißgerät 100 veranlassen. Die Steuersignale 72 können durch die Steuereinrichtung 140 basierend auf den Ergebnissen der Recheneinrichtung 130, insbesondere basierend auf der mindestens einen durch die Recheneinrichtung 130 berechneten Verlaufskurve, generiert werden. Die Entscheidung, welche Funktionen jeweils zu sperren, freizugeben und/oder zu modifizieren sind, kann auch vollständig durch die Recheneinrichtung 130 erfolgen, wobei die Steuereinrichtung 140 in diesen Fällen lediglich dazu ausgebildet sein kann, diese Entscheidung in die entsprechenden Steuersignale 72 umzusetzen.

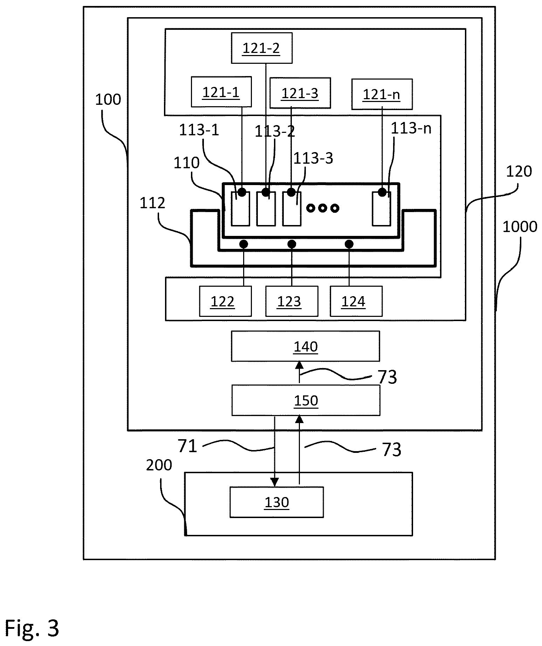

Eine weitere Alternative ist in Fig. 3 dargestellt. Bei dem Schweißsystem 1000 gemäß Fig. 3 ist die Recheneinrichtung 130 außerhalb des batteriebetriebenen Schweißgeräts 100 angeordnet, jedoch die Steuereinrichtung 140 innerhalb des Schweißgeräts 100 angeordnet. Demnach ist die Schnittstelle 150 des Schweißsystems 1000 und des Schweißgeräts 100 aus Fig. 3 dazu eingerichtet, die durch die Sensoreinrichtung 120 ermittelten Werte 71 an die Recheneinrichtung 130 zu übermitteln und von der Recheneinrichtung 130 die auf den bestimmten zeitlichen Verlaufskurven basierenden Auswertesignale 73 zu empfangen. Die Auswertesignale können die mindestens eine zeitliche Verlaufskurve direkt indizieren oder bereits eine Vorverarbeitung der mindestens einen zeitlichen Verlaufskurve umfassen. Die in dem Schweißgerät 100 enthaltene Steuereinrichtung 140 erhält die Auswertesignale 73 von der Recheneinrichtung 130 über die Schnittstelle 150 und bestimmt darauf basierend, ob die mindestens eine Funktion des Schweißgeräts 100 gesperrt, freigegeben und/oder modifiziert werden soll.

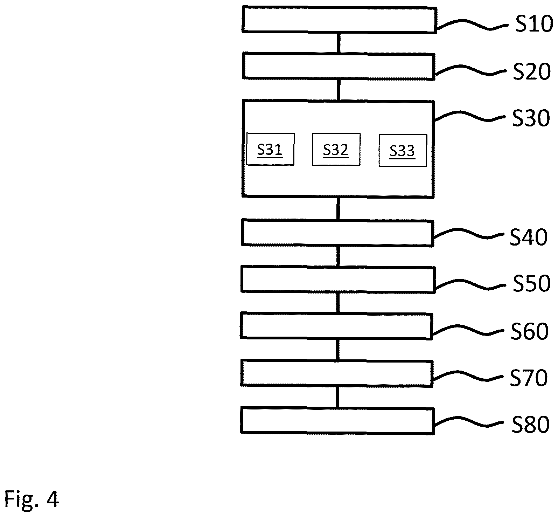

Fig. 4 zeigt ein Flussdiagramm zur schematischen Illustration einer Ausführungsform eines Verfahrens zum Betreiben mindestens eines batteriebetriebenen Schweißgeräts 100 gemäß einer weiteren Ausführungsform der vorliegenden Erfindung.

In einem Schritt S10 wird ein Wert mindestens eines Betriebsparameters einer Batterie 110 des batteriebetriebenen Schweißgeräts 100 regelmäßig oder kontinuierlich ermittelt, beispielsweise gemessen. Bevorzugt wird jeder Betriebsparameter einer Reihe von Betriebsparametern der Batterie 110, jeweils regelmäßig oder kontinuierlich, gemessen.

Wie im Vorangehenden bereits beschrieben wurde, können die Abtastintervalle je nach Betriebsparameter unterschiedlich ausfallen, abhängig davon, wie schnell sich der entsprechende Betriebsparameter ändert. Abtastraten von 1 Hz oder mehr, 20 Hz oder mehr, 50 Hz oder mehr oder 100 Hz oder mehr sind beispielhaft möglich. Beispielsweise kann eine Temperatur als Betriebsparameter mit einer Abtastrate von mindestens 1 Hz gemessen werden. Ein elektrischer Strom und/oder eine elektrische Spannung als Betriebsparameter kann mit einer Abtastrate von mindestens 100 kHz gemessen werden.

Das Ermitteln S10 des Werts oder der Werte für den oder die Betriebsparameter kann beispielsweise mittels der Sensoreinrichtung 120 erfolgen, wie im Vorangehenden ebenfalls bereits beschrieben wurde. Die Werte können beim Ermitteln, oder beim Übermitteln oder beim Empfangen, mit Zeitstempeln versehen werden.

In einem Schritt S20 wird basierend auf den ermittelten Werten, mindestens einer zeitlichen Verlaufskurve basierend auf dem oder den ermittelten Werten ermittelt (oder bestimmt). Vorzugsweise für mindestens für jeden Betriebsparameter, dessen Werte gemessen werden, eine zeitliche Verlaufskurve ermittelt. Je nach Abtastrate können die zeitlichen Verlaufskurven unterschiedlich granular ausfallen, oder es kann eine Interpolation vorgenommen werden, etwa um eine einheitliche Granularität der Verlaufskurven herzustellen. Zusätzlich können weitere zeitliche Verlaufskurven basierend auf weiteren, abgeleiteten Betriebsparametern (d.h. nicht direkt gemessenen Betriebsparametern) ermittelt oder erstellt werden. Solche abgeleiteten Betriebsparameter können etwa anhand von (in einer Datenbank eines Schweißsystems oder eines Schweißgeräts) gespeicherten Formeln berechnet werden, etwa durch Mittelwertbildung, Differenzbildung oder dergleichen. Das Ermitteln der mindestens einen zeitlichen Verlaufskurve kann beispielsweise erfolgen, wie im Vorangehenden mit Bezug auf die Recheneinrichtung 130 beschrieben wurde.

Daraufhin wird in einem Schritt S30 ein Zugang zu mindestens einer Funktion des mindestens einen batteriebetriebenen Schweißgeräts 100 festgelegt, und zwar basierend auf der mindestens einen zeitlichen Verlaufskurve. Wie bereits ausführlich beschrieben wurde, können die Kriterien und/oder die Entscheidungsbasis für jede Funktion anders ausfallen. Das Festlegen des Zugangs zu jeder Funktion kann insbesondere umfassen: ein Sperren S31 der Funktion, ein Freigeben S32 der Funktion und/oder ein Modifizieren S33 der Funktion. Es kann vorgesehen sein, dass jeweils nur eine dieser Optionen festgelegt wird. Welche Option jeweils gewählt wird, kann beispielsweise auch von einem Benutzerprofil eines Benutzers des Schweißgeräts oder von zusätzlichen Informationen über ein geplantes Vorhaben abhängen.

Wie ebenfalls schon erläutert wurde, kann in einem Schritt S40 eine Anforderung einer bestimmten Funktion des batteriebetriebenen Schweißgeräts 100 erhalten werden. Als Reaktion auf die Anforderung kann in dem Schritt S30 dann der Zugang zu der Funktion festgelegt werden.

Ein Anforderung kann etwa durch ergehen, dass ein Benutzer die entsprechende Funktion an einer Schnittstelle 150 (insbesondere an einer Benutzerschnittstelle als Teil der Schnittstelle 150) eines Schweißgeräts 100 auswählt, oder indem an der Schnittstelle 150 (insbesondere an der Benutzerschnittstelle) ein Menü aufgerufen wird, welches verfügbare (d.h. bereitgestellte oder bereitstellbare) Funktionen auflistet, oder bereits bei Starten des Schweißgeräts 100, bei einem Benutzerwechsel eines Schweißgeräts 100 (z.B. wegen der sich möglicherweise ändernden Benutzerrechte des sich ändernden Benutzerprofils) oder dergleichen. Bevorzugt kann zu einem dieser Zeitpunkte für die Gesamtheit der prinzipiell bereitstellbaren Funktionen eine Anforderung ergehen, sodass für den Benutzer bereits nur solche Funktionen an der Schnittstelle 150 (insbesondere Benutzerschnittstelle) auswählbar sind (oder auch nur solche Funktionen überhaupt angezeigt werden), welche freigegeben oder modifiziert wurden.

Optional kann außerdem vorgesehen sein, falls das Verfahren zum Betreiben einer Mehrzahl von batteriebetriebenen Schweißgeräten 100 verwendet wird, dass die Anforderung an einer zentralen Benutzerschnittstelle eingegeben wird, d.h. nicht an einem Schweißgerät 100 selbst. Hierzu kann beispielsweise eine mit einem Server 200 verbundene Schweißgeräte-Flottenmanagement-Software verwendet werden.

In einem Schritt S50 kann die Anforderung der bestimmten Funktion an eine Vielzahl von batteriebetriebenen Schweißgeräten übermittelt werden. Daraufhin kann in einem Schritt S60 bestimmt werden, ob durch mindestens ein batteriebetriebenes Schweißgerät 100 die angeforderte Funktion freigegeben ist, und wenn ja, durch welches oder welche. Dies kann beispielsweise dadurch erfolgen, dass die einzelnen Schweißgeräte das Sperren/Freigeben der angeforderten Funktion auf die Anforderung hin an die Schweißgeräte-Flottenmanagement-Software melden, welche daraufhin den Schritt S60 durchführt.

Wenn bekannt ist, durch welche Schweißgeräte 100 der Schweißgeräte-Flotte die Funktion freigegeben ist oder freigebbar wäre, kann durch die Schweißgeräte-Flottenmanagement-Software eine geplante Schweißabfolge (oder: ein Schweißfolgeplan) darauf basierend abgeändert werden.

Ist beispielsweise ursprünglich ein Schweißgerät A in einer Schweißabfolge dafür vorgesehen, eine Schweißung X durchzuführen, und meldet dieses Schweißgerät A das Sperren einer für die Schweißung X nötigen Funktion, können durch die Schweißgeräte-Flottenmanagement-Software eine oder mehrere anderen Schweißgeräte B, C, ... befragt werden, ob diese die Funktion freigeben oder freigeben würden. Falls sich mindestens ein Schweißgerät B findet, durch welches die Funktion freigegeben wird oder freigebbar wäre, kann beispielsweise eine Schweißabfolge dahingehend geändert werden, dass die Schweißung X durch das Schweißgerät B durchgeführt wird. Das Schweißgerät A kann dann beispielsweise dort wieder in die Schweißabfolge eingefügt werden, wo zuvor das Schweißgerät B angeordnet war und umgekehrt.

Die Anforderung kann auch an einem ersten Schweißgerät 100 angegeben werden, woraufhin, falls das Schweißgerät 100 bestimmt, dass die angeforderte Funktion gesperrt ist (oder optional auch in dem Fall, dass sie modifiziert ist), automatisch die Anforderung an die Schweißgeräte-Flottenmanagement-Software übermittelt, welche gemäß den Schritt S50 und S60 weiter vorgeht. Das Ergebnis, d.h. die Information über ein Schweißgerät 100, welches dem Benutzer die angeforderte Funktion freigibt, kann dem Benutzer wiederum durch die Schnittstelle 150 (insbesondere eine Benutzerschnittstelle) des Schweißgeräts 100 mitgeteilt werden, an welcher der Benutzer die Anforderung ursprünglich angegeben hat. Die Schweißgeräte 100 und die Schweißgeräte-Flottenmanagement-Software, welche beispielsweise auf dem Server 200 oder auf einem remote-verbundenen Rechner ausgeführt werden kann, können drahtlos oder drahtgebunden über verschiedene Protokolle (Ethernet, ZigBee, etc.) kommunizieren.

Es wurde bereits erwähnt, dass die Anforderung zusätzliche Informationen enthalten kann, welche das Ergebnis des Festlegens S30 des Zugangs zu der angeforderten Funktion beeinflussen können.

Weiters optional kann, wie im Vorangehenden bereits ausführlich beschrieben wurde, ein Test-Lastprofil verwendet werden, um weitere Informationen für das Festlegen S30 des Zugangs zu der mindestens einen Funktion zu erhalten.

Hierzu kann in einem Schritt S70 als Reaktion auf die Anforderung der bestimmten Funktion, die Batterie 110 mindestens eines batteriebetriebenen Schweißgeräts 100 (oder auch aller Schweißgeräte 100) mit mindestens einem Test-Lastprofil beaufschlagt werden.

In einem Schritt S80 kann eine Reaktion der Batterie 110 auf das Test-Lastprofil erfasst werden, wobei das Festlegen S30 des Zugangs zu der Funktion (insbesondere Sperren S31, Freigeben S32, oder Modifizieren S33 der Funktion des batteriebetriebenen Schweißgeräts 100) zusätzlich basierend auf der Reaktion der Batterie 110 auf das Test-Lastprofil erfolgt.

Basierend auf der Reaktion der Batterie 110 (oder des Schweißgeräts 100 insgesamt) auf das Test-Lastprofil kann auch ein Schweißjob empfohlen werden, welcher durch das entsprechende Schweißgerät durchführbar ist, wobei der Schweißjob eine oder mehrere Funktionen aufweist. Beispielsweise kann eine Schweißgeräte-Flottenmanagement-Software dazu eingerichtet sein, für eine bei ihr angefragte Funktion dasjenige Schweißgerät zu ermitteln, welches gerade noch, d.h. mit dem geringsten Puffer oder Abstand, dazu in der Lage ist, die entsprechende Funktion bereitzustellen. So kann sichergestellt werden, dass nicht für jede Funktion stets das insgesamt leistungsfähigste Schweißgeräte einer Schweißgeräte-Flotte verwendet wird, sondern die verfügbaren Fähigkeiten der Schweißgeräte aus der Schweißgeräte-Flotte optimal genutzt werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. Es versteht sich weiterhin, dass als separate beschriebene Einheiten teilweise ineinander integriert sein können.

Die Erfindungsidee kann wie folgt beschrieben werden: Betriebsparameter der Batterie eines batteriebetriebenen Schweißgeräts werden regelmäßig oder kontinuierlich erfasst und verwendet, um zeitliche Verlaufskurven zu ermitteln. Diese werden verwendet, um für mindestens eine Funktion des Schweißgeräts zu bestimmen, ob diese freigegeben, gesperrt, oder modifiziert wird.

### Bezugszeichenliste

- 71: Werte der Sensoren
- 72: Steuersignale
- 73: Auswertesignale
- 100: Schweißgerät
- 110: Batterie
- 111: Datenspeicher
- 112: Batterieaufnahme
- 113-i: Zelle der Batterie bzw. Batteriezelle
- 120: Sensoreinrichtung
- 121-i: Temperatursensor der Zelle 113-i der Batterie
- 122: Spannungssensor
- 123: Stromsensor
- 124: weitere Sensoren
- 130: Recheneinrichtung
- 140: Steuereinrichtung
- 150: Schnittstelle
- 200: Server
- 1000: Schweißsystem

- S10..S80: Verfahrensschritte

## Patentansprüche

1. Schweißsystem (1000), aufweisend:
- ein batteriebetriebenes Schweißgerät (100) umfassend eine Batterie (110) und/oder eine Batterieaufnahmevorrichtung (112) zur Aufnahme einer Batterie (110) sowie eine Sensoreinrichtung (120), welche zum regelmäßigen oder kontinuierlichen Ermitteln eines Werts mindestens eines Betriebsparameters der Batterie (110) des batteriebetriebenen Schweißgeräts (100) eingerichtet ist;
- eine Recheneinrichtung (130), welche dazu eingerichtet ist, basierend auf den ermittelten Werten mindestens eine zeitliche Verlaufskurve zu bestimmen; und
- eine Steuereinrichtung (140), welche dazu eingerichtet ist, basierend auf der mindestens einen zeitlichen Verlaufskurve mindestens eine Funktion des batteriebetriebenen Schweißgeräts (100) zu sperren, freizugeben oder zu modifizieren.

2. Schweißsystem (1000), nach Anspruch 1,
wobei für jeden Betriebsparameter, für welchen durch die Sensoreinrichtung (120) Werte ermittelt werden, eine zeitliche Verlaufskurve bestimmt wird.

3. Schweißsystem (1000) nach Anspruch 1 oder 2,
wobei der mindestens eine Betriebsparameter mindestens einen der folgenden umfasst:
- eine Temperatur an einer Position der Batterie (110);
- eine Umgebungstemperatur;
- eine Ansaugtemperatur eines Batterielüfters der Batterie (110);
- einen Ladezustand, SOC, der Batterie (110);
- einen gesamten Innenwiderstand der Batterie (110);
- einen Innenwiderstand einer Zelle der Batterie (110);
- einen Alterungszustand der Batterie (110);
- eine geschätzte verbleibende Lebensdauer der Batterie (110);
- eine Betriebsart der Batterie (110);
- einen Betriebszustand eines Kühlsystems;
- einen elektrischen Strom durch die Batterie (110);
- eine maximale, durch die Batterie (110) bereitstellbare elektrische Leistung;
- eine durch die Batterie (100) bereitgestellte Spannung; und/oder
- mindestens eine durch eine Zelle der Batterie (110) bereitgestellte Einzelspannung.

4. Schweißsystem (1000) nach einem der Ansprüche 1 bis 3, wobei die Sensoreinrichtung (120) dazu eingerichtet ist, den Wert mindestens einen des mindestens einen Betriebsparameters mit einer Abtastrate von mindestens 1 Hertz zu ermitteln.

5. Schweißsystem (1000) nach einem der Ansprüche 1 bis 4, wobei basierend auf der mindestens einen zeitlichen Verlaufskurve ermittelt wird, ob mindestens eine Funktion des batteriebetriebenen Schweißgeräts (100) in vorbestimmter Weise bereitstellbar ist, und diese Funktion gesperrt wird, falls dies nicht der Fall ist.

6. Schweißsystem (1000) nach einem der Ansprüche 1 bis 5 wobei basierend auf der mindestens einen zeitlichen Verlaufskurve ermittelt wird, ob mindestens eine Funktion des batteriebetriebenen Schweißgeräts (100) in vorbestimmter Weise bereitstellbar ist, und ein Parameter der entsprechenden Funktion automatisch darauf basierend derart angepasst wird, dass die Funktion bereitstellbar ist.

7. Schweißsystem (1000) nach einem der Ansprüche 1 bis 6,
wobei die Steuereinrichtung (140) eine Künstliche-Intelligenz-Entität aufweist, welche dazu trainiert und eingerichtet ist, als Eingabe die mindestens eine zeitliche Verlaufskurve zu erhalten und darauf basierend eine Ausgabe zu erzeugen, und die Steuereinrichtung (140) außerdem dazu eingerichtet ist, basierend auf dieser Ausgabe mindestens eine Funktion des batteriebetriebenen Schweißgeräts (100) zu sperren, freizugeben oder zu modifizieren.

8. Schweißsystem (1000) nach einem der Ansprüche 1 bis 7,
wobei die Steuereinrichtung (140) weiterhin dazu eingerichtet ist, eine Anforderung für eine Funktion zu erhalten und als Reaktion darauf die Batterie (110) mit mindestens einem Test-Lastprofil zu beaufschlagen,
wobei die Sensoreinrichtung (120) dazu eingerichtet ist, eine Reaktion der Batterie (110) auf das Test-Lastprofil zu erfassen, und
wobei die Steuereinrichtung (140) außerdem dazu eingerichtet ist, die mindestens eine Funktion des batteriebetriebenen Schweißgeräts (100) zusätzlich basierend auf der Reaktion der Batterie (110) auf das Test-Lastprofil zu sperren, freizugeben oder zu modifizieren.

9. Schweißsystem (1000) nach einem der Ansprüche 1 bis 8, wobei die mindestens eine Funktion des batteriebetriebenen Schweißgeräts (100) mindestens eine der folgenden umfasst:
- das Zünden eines Schweißlichtbogens;
- das Ausgeben eines Schweißprofils und/oder
- das vollständige Durchführen einer geplanten Schweißaufgabe.

10. Schweißsystem (1000) nach einem der Ansprüche 1 bis 9, wobei die Recheneinrichtung (130) und/oder die Steuereinrichtung (140) in das batteriebetriebene Schweißgerät (100) integriert ist.

11. Schweißsystem (1000) nach einem der Ansprüche 1 bis 10, wobei die Steuereinrichtung (140) einen Datenspeicher (111) umfasst, welcher mindestens einen Grenzwert und/oder mindestens eine Grenzkurve für mindestens eine bestimmte zeitliche Verlaufskurve aufweist, wobei der mindestens eine Grenzwert und/oder die mindestens eine Grenzkurve von der Steuereinrichtung (140) verwendet werden, um zu entscheiden, ob die mindestens eine Funktion des batteriebetriebenen Schweißgeräts (100) zu sperren, freizugeben oder zu modifizieren ist, und wobei der Datenspeicher (111) optional in die Batterie (110) integriert ist.

12. Verfahren zum Betreiben mindestens eines batteriebetriebenen Schweißgeräts (100) mit den Schritten:
- regelmäßiges (S10) oder kontinuierliches Ermitteln eines Werts mindestens eines Betriebsparameters einer Batterie (110) des batteriebetriebenen Schweißgeräts (100);
- Ermitteln (S20), basierend auf den ermittelten Werten, mindestens einer zeitlichen Verlaufskurve; und
- Sperren (S30), Freigeben (S40), oder Modifizieren (S50) einer Funktion des batteriebetriebenen Schweißgeräts (100) basierend auf der mindestens einen zeitlichen Verlaufskurve.

13. Verfahren nach Anspruch 12, umfassend:
- Erhalten (S60) einer Anforderung einer bestimmten Funktion des batteriebetriebenen Schweißgeräts (100).

14. Verfahren nach Anspruch 13, umfassend:
- Übermitteln (S70) der Anforderung der bestimmten Funktion an eine Vielzahl von batteriebetriebenen Schweißgeräten (100) nach einem der Ansprüche 1 bis 9; und
- Bestimmen (S80) eines batteriebetriebenen Schweißgeräts (100) durch welches die angeforderte Funktion freigegeben ist.

15. Verfahren nach einem der Ansprüche 13 oder 14, umfassend die Schritte:
Beaufschlagen (S90), als Reaktion auf die Anforderung der bestimmten Funktion, der Batterie (110) mindestens eines batteriebetriebenen Schweißgeräts (100) mit mindestens einem Test-Lastprofil, und
Erfassen (S100) einer Reaktion der Batterie (110) auf das Test-Lastprofil zu erfassen, wobei das Sperren (S30), Freigeben (S40), oder Modifizieren (S50) der Funktion des batteriebetriebenen Schweißgeräts (100) zusätzlich basierend auf der Reaktion der Batterie (110) auf das Test-Lastprofil erfolgt.
